# EUROPEAN PATENT SPECIFICATION

(11) **EP 0 293 305 B1**
(45) Date of publication and mention of the grant of the patent: **03.03.1993**
(21) Application number: 88401307.9
(22) Date of filing: 27.05.1988
(51) Int. Cl.: G11B 23/113

(54) **An apparatus having means for unloosenly winding a tape to reels of a tape cassette**
Gerät mit Vorrichtung zum dichten Aufwickeln eines Bandes auf einem Kassettenhub
Appareil comprenant un dispositif pour enrouler une bande serrée autour d'une bobine de cassette

(30) Priority: 29.05.1987 JP 135539/87
(43) Date of publication of application: 30.11.1988
(73) Proprietor: SONY CORPORATION, Tokyo 141 (JP)
(72) Inventor: Watanabe, Toshihiro Sony Magnetic Products, Inc., Tokyo (JP); Fujiwara, Shiro Sony Magnetic Products, Inc., Tokyo (JP)
(74) Representative: Thévenet, Jean-Bruno

(56) References cited:
- WO-A-87/02343
- DE-A- 2 209 968
- GB-A- 2 147 279
- US-A- 3 637 153

## Description

The present invention relates to an apparatus having means for unloosenly winding a magnetic tape to reels of a tape cassette having a complete cassette housing in which, for example, a pair of reels are rotatably incorporated.

In the prior art, a pair of reels having connected therebetween a leader tape are incorporated into a cassette housing to provide a complete video or audio tape cassette. Then, a recorded magnetic tape or vacant magnetic tape is supplied to the above-mentioned tape cassette from the outside to be wound on the reels of the tape cassette, thus providing a complete tape cassette. In other words, the reels having only the leader tape being previously connected therebetween are rotatably secured within the cassette housing, the leader tape is withdrawn from the tape cassette in which the reels are pivotably secured, the magnetic tape supplied from the outside is connected to the withdrawn leader tape and the thus connected magnetic tape is wound on the reels of the tape cassette.

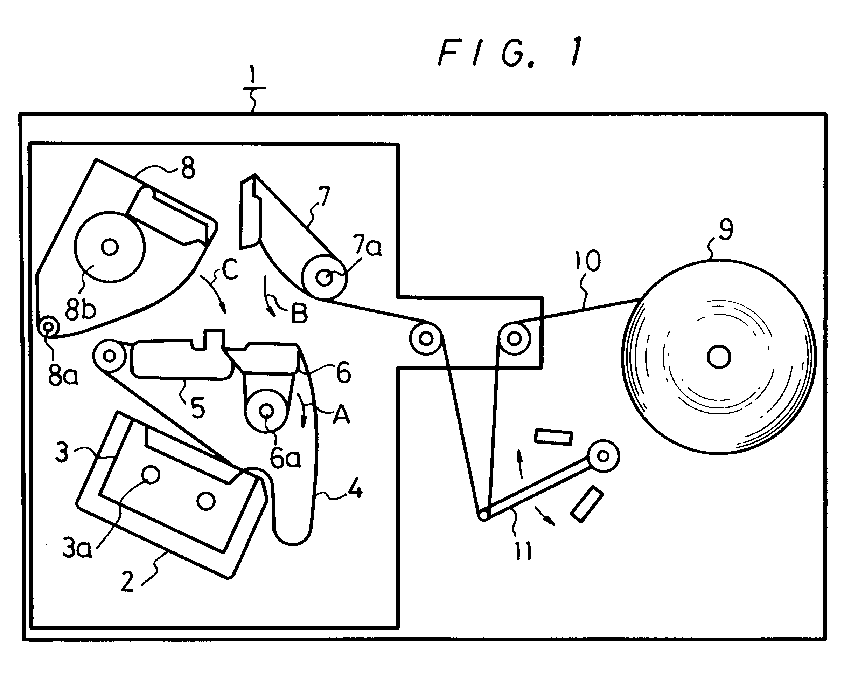

Fig. 1 illustrates an example of an apparatus for carrying out the above-mentioned tape winding work. This conventional tape winding apparatus is disclosed in Japanese Published Patent Application No. 49-30444. Fig. 1 shows an example of such a tape winding apparatus. In Fig. 1, reference numeral 1 generally designates an overall arrangement of such a conventional tape winding apparatus. A cassette holder 2 is secured on the front of this tape winding apparatus 1, and a tape cassette 3 in which only a leader tape 4 is connected between reels is loaded onto this cassette holder 2. A tape supporting unit 5 and a first splice unit 6 are located continuously in the vicinity of the tape cassette 3. The tape supporting unit 5 is not movable, while the first splice unit 6 is pivotally supported at its rotation shaft 6a and is movable so as to be spaced apart from the tape supporting unit 5 in the direction shown by an arrow A. Above the tape supporting unit 5, there are provided second and third splice units 7 and 8 which are pivoted at their rotation shafts 7a and 8a. When being rotated in the directions shown by arrows B and C, the second and third splice units 7 and 8 are brought in contact with the tape supporting unit 5. Further, in this tape winding apparatus 1, a magnetic tape 10 is wound around a large reel 9. The magnetic tape 10 withdrawn from the reel 9 is supplied through a tension applying section 11 to the second splice unit 7. A splice tape (not shown) is wound around a reel 8b within the third splice unit 8.

The conventional tape winding apparatus 1 is constructed in this way. For a further example, see patent document US-A-3 637 153 disclosing a winding apparatus having the features of the preamable of claim 1. When the magnetic tape 10 is wound on the reels of the tape cassette 3, the leader tape 4 is first withdrawn from the tape cassette 3 held on the cassette holder 2, and the thus withdrawn leader tape 4 is passed through the tape supporting unit 5 and the first splice unit 6. Then, the leader tape 4 is cut by the first splice unit 6, and one and the other end portions of the leader tape 4 thus cut are respectively supported by the tape supporting unit 5 and the first splice unit 6. Thereafter, the first splice unit 6 is rotated in the direction shown by the arrow A so as to be spaced apart from the tape supporting unit 5. The second and third splice units 7 and 8 are then respectively rotated in the directions shown by the arrows B and C so as to come in contact with the tape supporting unit 5, wherein the end portion of the magnetic tape 10 supplied to the second splice unit 7 is connected to one end of the leader tape 4 supported by the tape supporting unit 5 by means of the splice tape (not shown) supplied from the third splice unit 8.

At the completion of the above-mentioned connecting or splicing work, the third splice unit 8 is returned to the original position. Then, one reel 3a of the tape cassette 3 is rotated at high speed to wind the magnetic tape 10, transported from the large reel 9, therearound by a predetermined amount. At that time, the tension applying section 11 applies a predetermined tension to the magnetic tape 10 so that the magnetic tape 10 is wound on the reel 3a satisfactorily. At the completion of this winding, the magnetic tape 10 is cut by the second splice unit 7, the end portion of the thus cut magnetic tape 10 wound into the tape cassette 3 is supported by the tape supporting unit 5. Thereafter, the second splice unit 7 is rotated to the original position. Then, the first and third splice units 6 and 8 are again rotated and brought in contact with the tape supporting unit 5, and the other end portion of the leader tape 4 supported by the first splice unit 6 is connected to the end portion of the magnetic tape 10 supported by the tape supporting unit 5 by means of the splice tape (not shown). The thus spliced tape is taken off from the tape supporting unit 5 and the first splice unit 6, and the reel 3a of the tape cassette 3 is rotated to wind the tape to the reels of the tape cassette 3 completely.

In this way, the tape winding apparatus 1 operates to wind the magnetic tape 10 to the reels of the tape cassette 3 whereby the tape cassette having the magnetic tape 10 is thus completed.

However, since the magnetic tape 10 is wound on the reel 3a of the tape cassette 3 at high speed, the winding of the magnetic tape 10 tends to be very susceptible to be in bad shape. To avoid this defect, the tension applying section 11 is provided, but the application of the tension to the magnetic tape 10 by the tension applying section 11 is not so powerful for preventing the winding of the magnetic tape 10 from being put in bad shape.

In the art of winding webs, such as plastics sheeting, it is known from document GB-A-2 147 279 to provide a contact roll via which the web is spooled. The roll is mounted so as to be free to swivel and constitutes a fixture of the winding apparatus. The contact roll disclosed in this document has a totally different size with respect to a roller which can be brought into contact with a tape reel inside a tape cassette.

### OBJECTS AND SUMMARY OF THE INVENTION

Accordingly, an object of the present invention is to provide an improved apparatus having means for unloosenly winding a tape to reels of a tape cassette.

Another object of the present invention is to provide an apparatus having means for unloosenly winding a tape to reels of a tape cassette by which a magnetic tape can be wound on the reels of the tape cassette satisfactorily in good shape.

According to one aspect of the present invention, the above objects are achieved by the apparatus defined in claim 1.

### BRIEF DESCRIPTION OF THE DRAWINGS

A better understanding of the present invention can be gained from a consideration of the following detailed description of the preferred embodiment thereof, in conjunction with the figures of the accompanying drawings, wherein :
Fig. 1 is a schematic representation of an example of a conventional apparatus for unloosenly winding a tape to reels of a tape cassette;
Fig. 2 is a schematic representation of an embodiment of an apparatus having means for unloosenly winding a tape to reels of a tape cassette according to the present invention; and
Fig. 3 and 4 are schematic representations of the apparatus shown in Fig. 2 and illustrating the operation thereof, respectively.

### DETAILED DESCRIPTION OF THE PREFERRED EMBODIMENT

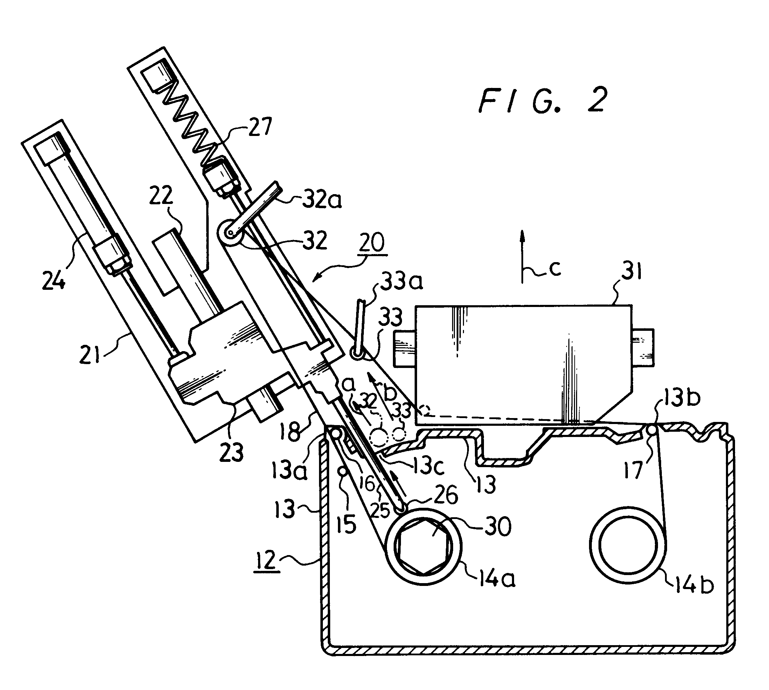

Now, an embodiment of an apparatus having means for unloosenly winding a tape to reels of a tape cassette according to the present invention will hereinafter be described with reference to Figs. 2 to 4.

According to the apparatus of this embodiment, a magnetic tape is unloosenly wound on reels of a video tape cassette 12 shown in Fig. 2 and the tape cassette having the magnetic tape incorporated therein is brought about as a complete tape cassette. In the video tape cassette 12, reels 14a and 14b are pivotably secured within its inside encircled by a side wall 13. Three openings 13a, 13b and 13c are formed through the side wall 13, and within the tape cassette 12, there are provided guide rollers 15 and 16 in the vicinity of the opening portion 13a, as shown in Fig. 2. Meanwhile, within the tape cassette 12, there is also provided a guide roller 17 in the vicinity of the opening portion 13b. One and the other end of a leader tape 18 are respectively engaged with the pair of reels 14a and 14b. The leader tape 18 thus engaged is travelled from the reel 14a through the guide rollers 15 and 16, the opening portions 13a and 13b and the guide roller 17 to the reel 14b. The leader tape 18 is exposed outside from the tape cassette 12 between the opening portions 13a and 13b. In the initial state, the exposed leader tape 18 is stretched to be a straight line between the opening portions 13a and 13b, or between the guide rollers 16 and 17. The opening portion 13c is located in the vicinity of the opening portion 13a.

The embodiment of the apparatus having means for unloosenly winding the magnetic tape to the tape cassette 13 in accordance with the present invention constructed as described above is constructed as shown in Fig. 2. Fig. 2 shows such a state that the tape cassette 12 is held on a cassette holder (not shown) and then loaded onto the tape winding apparatus of the invention. In this state, as Fig. 2 shows, a reel drive shaft 30 is engaged into the reel 14a. Under this state, a splice unit 31 for cutting the leader tape 18 and connecting or splicing the leader tape 18 with the magnetic tape is located in the vicinity of the portion in which the leader tape 18 is exposed between the opening portions 13a and 13b of the tape cassette 12. Further, guide rollers 32 and 33 rotatably supported by a pair of arms 32a and 33a are located between the exposed portion of the leader tape 18 and the side wall 13 of the tape cassette 12 (shown by phantoms in Fig. 2). The guide rollers 32 and 33 are used to withdraw the leader tape 18. After the tape cassette 12 is loaded onto the tape winding apparatus of the invention, the guide rollers 32 and 33 are moved so as to be spaced apart from the tape cassette 12 as shown by arrows a and b. By the above-mentioned movement of the guide rollers 32 and 33, the leader tape 18 is withdrawn as illustrated in Fig. 2. Under the state that the leader tape 18 is withdrawn as set forth above, the leader tape 18 is brought in contact with the splice unit 31. After the splice unit 31 is spaced apart from the tape cassette 12 as shown by an arrow c, the leader tape 18 is connected to the magnetic tape by the splice unit 31.

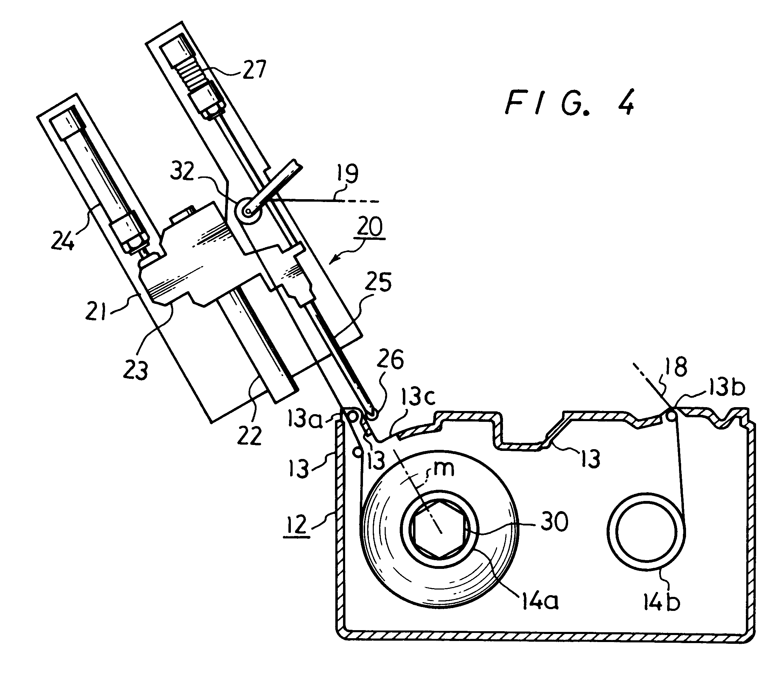

Further, as Fig. 4 shows, a winding unit 20 is located in an opening relation to the opening portion 13c of the side wall 13 of the tape cassette 12. The winding unit 20 is mounted on a block 21 and the block 21 can be moved up and down by an elevating cylinder (not shown). As Figs. 2 through 4 show, the block 21 is brought to the same height as that of the tape cassette 12 by the elevating cylinder. The block 21 is normally placed in height lower than the tape cassette 12. On the block 21, there is mounted a winding roller support member 23 which can be moved straight along a guide rail 22. In this case, m assumes a line connecting the opening portion 13c and the center of the reel 14a (see Fig. 4). Then, the moving direction of the winding roller support member 23 along the guide rail 22 is in parallel to the line m. The support member 23 is coupled to a cylinder 24 and can be moved straight in parallel to the line m by the cylinder 24. Whenever necessity arises, the cylinder 24 is set free so that the support member 23 can be moved straight by the force applied thereto from the outside. An arm 25 is fixed at its one end to the support member 23 and a winding roller 26 is rotatably supported at the other end of the arm 25. The arm 25 with the winding roller 26 is located along the extension of the line m connecting the above-mentioned opening portion 13c and the center of the reel 14a. When the block 21 is positioned at substantially the same height as the tape cassette 12 by the elevating cylinder, if the winding roller support member 23 is pushed by the cylinder 24 as shown in Fig. 2, the winding roller 26 is inserted through the opening portion 13c into the tape cassette 12 and is brought in contact with the tape winding face of the reel 14a. A coil spring 27 is provided at the rear stage of the support member 23. When the cylinder 24 is set free, the coil spring 27 pushes the supporting member 23 toward the reel 14a by its spring force. Other arrangements are made the same as those of the conventional tape winding apparatus.

According to the tape winding apparatus of this embodiment constructed as set forth above, when the magnetic tape is wound on the reel 14a of the tape cassette 12 by this tape winding apparatus of the invention, the guide rollers 32 and 33 located near the tape cassette 12, as shown by the phantoms in Fig. 2, are moved in the direction indicated by the arrows a and b to withdraw the leader tape 18 out of the tape cassette 12. At that time, the winding unit 20 is placed at such a state that its arm 25 is slid back (as shown in Fig. 4) by the cylinder 24 and is also placed at the position lower than the tape cassette 12 by the elevating cylinder. Under this state, the splice unit 31 is spaced apart from the tape cassette 12 in the direction shown by the arrow c in Fig. 2 and splices or connects the leader tape 18 with the magnetic tape supplied from a tape reel (not shown) located outside. After the completion of the splicing work, the elevating cylinder moves the winding unit 20 to substantially the same height as that of the tape cassette 12. Under this state, the cylinder 24 slidably moves the support member 23 to the tape cassette 12 side to thereby insert the arm 25 supported by the support member 23 and the winding roller 26 supported by the arm 25 through the opening portion 13c into the cassette tape 12, wherein the winding roller 26 is brought in contact with the tape winding face of the reel 14a (in the state of Fig.2).

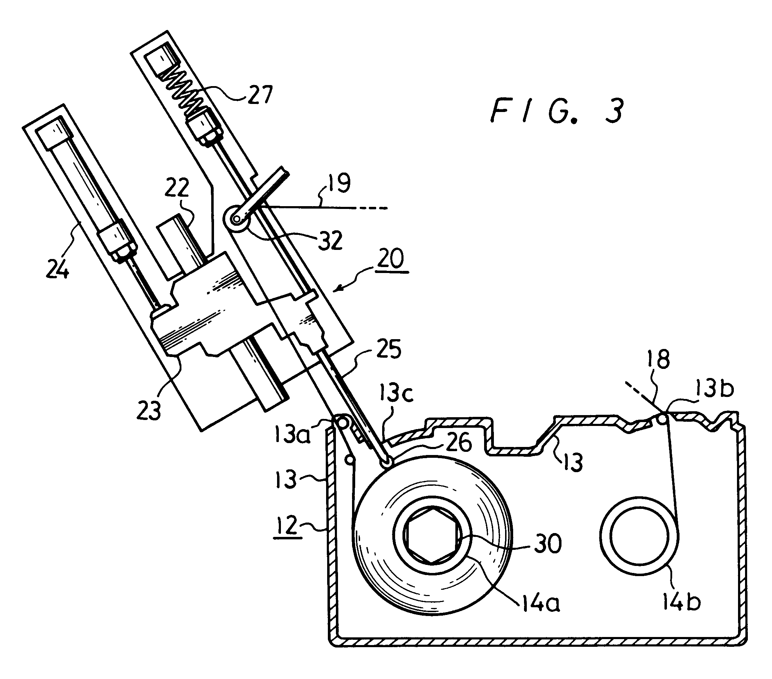

When the winding roller 26 comes in contact with the tape winding face of the reel 14a, the cylinder 24 is set free so that the winding roller 26 is brought in contact with the tape winding face of the reel 14a only by the spring force of the coil spring 27. Under this condition, when the reel 14a is rotated at high speed by the reel drive shaft 30 as shown in Fig. 3, the magnetic tape 19 connected to the leader tape 18 begins to be wound around the reel 14a. Although the radius of the tape wound on the reel 14a is gradually increased, the cylinder 24 is already set free so that the arm 25 is slid back in accordance with the increase of the radius of the tape wound on the reel 14a, while the winding roller 26 is continuously urged against the surface of the tape wound on the reel 14a by the spring force of the coil spring 27. When the winding of the magnetic tape 19 of the predetermined length on the reel 14a has been finished, the winding roller 26 is fully moved back and is then outside the tape cassette 12 by the cylinder 24. Then, the elevating cylinder moves the winding unit 20 to the position lower than the cassette 12. After the end portion of the leader tape 18 engaged to the reel 14b side and the magnetic tape 19 are connected by the splice unit 31, the guide rollers 32 and 33 are returned to the position near the tape cassette 12 and the magnetic tape 19 and the leader tape 18 are put back to the inside of the tape cassette 12. Then, the winding work is ended.

The tape winding apparatus of this embodiment is constructed as described above. In accordance with the teaching of the present invention, when the magnetic tape 19 is wound around the reel 14a, the winding roller 26 is brought in contact with the surface of the tape wound on the reel 14a by the spring force of the coil spring 27 with the result that the magnetic tape 19 is wound on the reel 14a side under the state that the magnetic tape 19 is in close contact with the reel 14a, thus making it possible to prevent the winding of the magnetic tape 19 on the reel 14a from being in bad shape. Therefore, the magnetic tape 19 thus wound by use of the tape winding apparatus of the invention is satisfactorily wound around the reel 14a in good shape.

While in the above-mentioned embodiment the roller is used as the means which is brought in contact with the reel 14a, such a variant is also possible that a pad, a brush or the like is attached to the top portion of the arm 25, wherein the pad, brush or the like is brought in contact with the reel 14a side.

According to the tape winding apparatus of the present invention, as set forth above, the magnetic tape supplied from the outside can be wound around the reel 14a of the tape cassette 12 in good shape. Thus, the magnetic tape can be wound around the reel 14a satisfactorily.

## Claims

1. An apparatus for unloosenly winding a magnetic tape to reels (14a, 14b) of a tape cassette (12) comprising :
a) cassette holder means for holding thereon a tape cassette (12) in which a pair of reels (14a, 14b) are pivotably incorporated and a leader tape (18) is wound on said reels (14a, 14b);
b) reel drive means (30) engageable with one of said pair of reels when said tape cassette (12) is loaded (14a) on said cassette holder means;
c) means (32, 33) for withdrawing said leader tape (18) from said tape cassette (12); and
d) splice means (31) for cutting said withdrawn leader tape (18) and for splicing one end of said cut leader tape (18) to a magnetic tape (19) supplied from the outside;
characterized in that it further comprises:
e) winding adjustable means (20) operable to bring a roller (26) into contact with a tape winding face of said reel (14a) upon winding of said magnetic tape, so that said magnetic tape (19) is regularly wound on said reel (14a) in adjusted, good shape.

2. The apparatus according to claim 1, characterized in that said leader tape withdrawing means (32, 33) is formed of a pair of guide rollers (32, 33) located in the vicinity of said tape cassette (12).

3. The apparatus according to claim 1, characterized in that it further comprises elevating means for moving said winding adjustable means (20) in the up and down direction.

4. The apparatus according to claim 3, characterized in that said winding adjustable means (20) further includes means (25) for supporting said roller (26) at its free end and driving means (24) for moving said supporting means (25) such that said roller (26) is moved so as to become close to or distant from said tape winding face of said reel (14a) in a direction to the center of said reel (14a).

5. The apparatus as defined in claim 4, characterized in that said winding adjustable means (20) further comprises biasing means (27) for urging said roller (26) toward said tape winding face of said reel (14a) by its biasing force.

## Patentansprüche

1. Gerät zum dichten Aufwickeln eines Magnetbandes auf Spulen (14a, 14b) einer Bandkassette (12), mit
a) einer Kassettenhalteeinrichtung zum Halten einer Bandkassette (12), in welcher ein Paar Spulen (14a, 14b) drehbar enthalten sind und ein Vorband (18) auf die Spulen (14a, 14b) aufgewickelt ist,
b) einer Spulenantriebseinrichtung (30), die mit einer (14a) der beiden Spulen in Eingriff bringbar ist, wenn die Bandkassette (12) auf die Kassettenhalteeinrichtung geladen ist,
c) einer Einrichtung (32, 33) zum Fortnehmen des Vorbandes (18) von der Bandkassette (12), und
d) einer Spleißeinrichtung (31) zum Schneiden des fortgenommenen Vorbandes (18) und zum Verbinden eines Endes des geschnittenen Vorbandes (18) mit einem von außen zugeführten Magnetband (19),
**gekennzeichnet durch**
e) eine Aufwickeleinstelleinrichtung (20) zum Inkontaktbringen einer Rolle (26) mit einer Bandaufwickelfläche der Spule (14a) beim Aufwickeln des Magnetbandes, so daß das Magnetband (19) in einer eingestellten, guten Form regulär auf die Spule (14a) gewunden ist.

2. Gerät nach Anspruch 1, **dadurch gekennzeichnet**, daß die Einrichtung (32, 33) zum Fortnehmen des Vorbandes aus einem Paar Führungsrollen (32, 33) gebildet ist, die sich neben der Bandkassette (12) befinden.

3. Gerät nach Anspruch 1, **gekennzeichnet durch** eine Hebeeinrichtung zum Bewegen der Aufwickeleinstelleinrichtung (20) in der Aufwärts- und Abwärtsrichtung.

4. Gerät nach Anspruch 3, **dadurch gekennzeichnet,** daß die Aufwickeleinstelleinrichtung (20) eine Einrichtung (25) zum Halten der Rolle (26) an ihrem freien Ende und eine Antriebseinrichtung (24) zum Bewegen der Halteeinrichtung (25) derart aufweist, daß die Rolle (26) in einer Richtung zum Zentrum der Spule (14a) derart bewegt wird, daß sie nahe an die oder in eine Entfernung von der Bandaufwickelfläche der Spule (14a) kommt.

5. Gerät nach Anspruch 4, **dadurch gekennzeichnet,** daß die Aufwickeleinstelleinrichtung (20) eine Vorspanneinrichtung (27) zum Drücken der Rolle (26) in Richtung der Bandaufwickelfläche der Spule (14a) durch ihre Vorspannkraft aufweist.

## Revendications

1. Appareil destiné à enrouler de façon serrée une bande magnétique sur des bobines (14a, 14b) d'une cassette à bande (12) comportant :
a) des moyens porte-cassettes destinés à maintenir une cassette à bande (12) dans laquelle une paire de bobines (14a, 14b) est incorporée de façon pivotante et une amorce (18) est enroulée sur lesdites bobines (14a, 14b);
b) des moyens d'entraînement de bobine (30) pouvant être engagés avec une desdites paires de bobines lorsque ladite cassette à bande (12) est chargée sur lesdits moyens porte-cassettes;
c) des moyens (32, 33) destinés à extraire ladite amorce (18) de ladite cassette à bande (12); et
d) des moyens de raccordement (31) destinés à couper ladite amorce extraite (18) et à raccorder une extrémité de ladite amorce coupée (18) à une bande magnétique (19) provenant de l'extérieur;
caractérisé en ce qu'il comporte en outre :
e) des moyens d'enroulement réglables (20) pouvant fonctionner de façon à amener un galet (26) en contact avec une face d'enroulement de bande de ladite bobine (14a) lors de l'enroulement de ladite bande magnétique, de sorte que ladite bande magnétique (19) est enroulée de manière régulière sur ladite bobine (14a) avec une forme ajustée correcte.

2. Appareil selon la revendication 1, caractérisé en ce que lesdits moyens d'extraction d'amorce (32, 33) sont constitués par une paire de galets de guidage (32, 33) disposés au voisinage de ladite cassette à bande (12).

3. Appareil selon la revendication 1, caractérisé en ce qu'il comporte en outre des moyens de levage destinés à déplacer lesdits moyens d'enroulement réglables (20) dans les directions vers le haut et vers le bas.

4. Appareil selon la revendication 3, caractérisé en ce que lesdits moyens d'enroulement réglables (20) comportent en outre des moyens (25) destinés à supporter ledit galet (26) à son extrémité libre et des moyens d'entraînement (24) destinés à déplacer lesdits moyens de support (25) de telle sorte que ledit galet (26) est déplacé de façon à se rapprocher ou à s'écarter de ladite face d'enroulement de bande de ladite bobine (14a) dans une direction vers le centre de ladite bobine (14a).

5. Appareil selon la revendication 4, caractérisé en ce que lesdits moyens d'enroulement réglables (20) comportent en outre des moyens de rappel (27) destinés à pousser ledit galet (26) en direction de ladite face d'enroulement de bande de ladite bobine (14a) grâce à leur force de rappel.
